# EUROPÄISCHE PATENTSCHRIFT

(11) **EP 0 548 377 B1**
(45) Veröffentlichungstag und Bekanntmachung des Hinweises auf die Patenterteilung: **23.07.1997**
(21) Anmeldenummer: 91115397.1
(22) Anmeldetag: 11.09.1991
(51) Int. Cl.: E01B 35/00, B61K 9/08, G01B 5/20, G01B 7/28

(54) **Messgerät zum Vermessen von Gleisschienen**
Measuring instrument for surveying railway lines
Dispositif de mesure pour contrôler le profil de voies ferrées

(43) Veröffentlichungstag der Anmeldung: 30.06.1993
(73) Patentinhaber: BA-BE-D GmbH, D-85614 Kirchseeon (DE)
(72) Erfinder: Kastenmüller, Anton, W-8018 Grafing (DE)
(74) Vertreter: Englaender, Klaus, Dipl.-Ing.

(56) Entgegenhaltungen:
- EP-A- 0 229 243
- EP-A- 0 383 477
- EP-A- 0 404 597
- FR-A- 1 206 421
- PATENT ABSTRACTS OF JAPAN, vol. 15, no. 182 (M-1111) 10. Mai 1991 & JP-A-3 043 298 (MITSUBISHI ELECTRIC CORP.) 25. Februar 1991

## Beschreibung

Die Erfindung betrifft ein Meßgerät der im Oberbegriff des Anspruches 1 genannten Art.

Gleisschienen, insbesondere Gleisschienen für die Eisenbahn bestehen im allgemeinen aus einem horizontalen Untergurt, einem darauf stehenden vertikalen Steg sowie einem auf der Oberseite des Steges angeordneten Obergurt oder Schienenkopf, auf dessen Oberseite die Laufräder der Schienenfahrzeuge abrollen und an deren Innenflanke der Spurkranz dieser Laufräder geführt wird. Die Querschnittsform des Schienenkopfes, die Spurweite zwischen den Schienenköpfen zweier paralleler Schienen und die Höhenlage der Schienenköpfe bestimmen die Qualität und damit den Fahrkomfort sowie die Sicherheit der Gleisanlage. Das Querschnittsprofil, die Spurweite und die Höhenlage werden deshalb beim Verlegen neuer Schienenanlagen sowie danach in regelmäßigen Abständen vermessen und bei Auftreten von Abweichungen einer bestimmten, vorgegebenen Größenordnung nachgearbeitet.

Die FR-PS 1 206 421 zeigt und beschreibt ein Meßgerät der im Oberbegriff des Anspruches 1 genannten Art, welches im wesentlichen nur zum Messen der Spurweite, der Wölbung der Schienen in der Horizontalebene und der Überhöhung einer Schiene gegenüber der anderen eingerichtet ist. Sie zeigt keine Einrichtung zum Vermessen eines Schienenkopfes, so daß sie die darauf bezogenen, für den Fahrkomfort und die Fahrsicherheit äußerst wichtigen Daten nicht erfassen kann. Ein weiterer Nachteil wird darin gesehen, daß die als Seitenanschläge dienenden Rollen 6 und 7 an den Innenflanken der zugeordneten Schienen anliegen. Da neben den Oberseiten der Schienenköpfe vor allem die Innenflanken zu den hochbeanspruchten, einem Verschleiß und einer Gradbildung unterworfenen Flächen gehören, eignen sie sich nicht als vom Verschleiß unbeeinflußte Referenzflächen für die Führung des Meßgerätes, denen gegenüber Veränderungen gemessen werden sollen.

Ein weiterer Nachteil des bekannten Meßgerätes wird darin gesehen, daß alle Meßergebnisse über Skalen und Zeiger direkt abgelesen und in einem weiteren, aufwendigen Schritt auf eine Zeichenunterlage übertragen werden müssen, um eine sogenannte Meßwertkurve herzustellen.

Es sind zwar bereits Meßgeräte bekannt, bei welchen die Wege des X-Schlittens und des Y-Schlittens erfaßt und direkt an ein mit dem Meßgerät ständig verbundenes Zeichengerät gegeben werden. Der X-Schlitten wird beispielsweise durch den Stellantrieb in X-Richtung verfahren, wobei der Meßtaster durch das Eigengewicht der Y-Schlitteneinheit in Anlage am Schienenkopfprofil gehalten wird, so daß er den Y-Koordinaten des Schienenkopfprofils folgt. Die Wege des X-Schlittens und des Y-Schlittens werden durch Meßaufnehmer gemessen und die Meßwerte werden an das Zeichengerät ausgegeben, welches das Profil des Schienenkopfes im allgemeinen im Maßstab 1:1 aufzeichnet.

Bei älteren Meßgeräten der bekannten Art war das Zeichengerät Bestandteil des Meßgerätes; beispielsweise war ein Schreibstift direkt mit dem Y-Schlitten gekoppelt und er zeichnete eine Profilkurve direkt auf einen in den Meßkopf einzulegenden Aufzeichnungsträger. Dieses Gerät konnte nur Profilkurven im Maßstab 1:1 aufzeichnen, was bei den zunehmenden Anforderungen an die Genauigkeit im allgemeinen nicht ausreichend war. Eine höhere Auflösung ließe sich nur durch Übertragen der aufgezeichneten Kurve in andere Maßstäbe erreichen, so daß vielfach zwischen Messung und Auswertung dieser Messung eine längere Zeit verging. Außerdem war die Handhabung dieser Geräte, das Wechseln des Aufzeichnungsträgers und/oder des Schreibstiftes im rauhen, Wind und Wetter ausgesetzten Betrieb direkt am Gleiskörper äußerst schwierig.

Bei einem neueren bekannten Meßgerät werden die Wege des X-Schlittens und des Y-Schlittens durch analoge Meßwertgeber erfaßt und elektrisch auf ein gesondertes Zeichengerät übertragen, welches dem Meßgerät zugeordnet ist. Diese Anordnung erlaubt zwar schon eine elektrische Übersetzung der Meßwege und damit beispielsweise eine Maßstabsvergrößerung oder -verzerrung des gemessenen Profils. Die analogen Zeichengeräte, die zusammen mit dem Meßgerät manuell von Meßort zu Meßort getragen werden müssen, sind jedoch sperrig und schwer, so daß ihre Handhabung umständlich und schwierig ist. Außerdem besteht auch hier das Problem, daß der Aufzeichnungsträger und der Schreibstift vor Ort häufig ausgewechselt werden muß, was vor allem bei ungünstigen Wetterlagen auf erhebliche Schwierigkeiten stößt. Ein weiterer Nachteil wird darin gesehen, daß mit dieser bekannten Einrichtung bei jedem Meßvorgang jeweils immer nur eine Kurve im vorgegebenen Maßstab aufgezeichnet wird; wenn andere Maßstäbe oder bestimmte Maßstabsverzerrungen gewünscht werden, so müssen diese mit zusätzlichen Meßvorgängen oder durch Überarbeitung der Meßkurven erstellt werden.

Ein weiterer Nachteil des zuletzt beschriebenen, bekannten Meßgerätes liegt in dem physikalischen Prinzip, die Schlittenpositionen direkt unter Real-Time-Bedingungen auf den Aufzeichnungsträger zu übertragen. Damit werden beispielsweise alle Schwingungen der Meßschlitten, beispielsweise die Anfahr- und Auslaufschwingungen des Stellmotors, mit aufgezeichnet, was die Auswertung der Zeichnung erheblich erschweren kann.

Die EP 0 404 597 zeigt zwar bereits eine Meßanordnung mit einem Profilmeßtaster und einer Einrichtung zum Erfassen der Position des Meßtasters als digitale Werte, die gespeichert und weiterverarbeitet werden können; diese Meßanordnung ist jedoch nicht an die Aufgabe angepaßt, Schienen zu vermessen. Sie dient vielmehr dazu, Werkstücke 4 zu vermessen, die auf einem Tisch 2 aufgespannt werden. Um Werkstücke unterschiedlicher Größe vermessen zu können, ist in technisch aufwendiger Weise ein Wagen 10 vorgesehen, welcher zu Zwecken der Höheneinstellung mittels eines Motors 21 an einer vertikalen Säule 8 verschiebbar angeordnet ist.

Es ist die Aufgabe der vorliegenden Erfindung, ein Meßgerät der im Oberbegriff des Anspruches 1 genannten Art zu schaffen, welches die Möglichkeit bietet, alle wesentlichen, für den Fahrkomfort und die Fahrsicherheit relevanten Daten von Gleisschienen zu messen, welches in seinem Aufbau und in seiner Handhabung sehr einfach ist, und welches es erlaubt, die gemessenen Profile mit geringem Aufwand zu bearbeiten, z.B. maßstäblich zu verändern.

Diese Aufgabe ist erfindungsgemäß durch die im Anspruch 1 beschriebenen Merkmale gelöst.

Das Meßgerät weist bezüglich seines mechanischen Aufbaus an seinem Meßkopf einen quer zur Schiene sowie in vertikaler Richtung beweglichen Profilmeßtaster sowie eine Einrichtung zum Erfassen der Position des Meßtasters in der durch die beiden Richtungen aufgespannten Ebene auf. Ein derartiger Meßtaster kann bei auf die Gleisschienen aufgesetztem und durch die Seitenanschläge richtig positioniertem Meßgerät die Profilkontur des Schienenkopfes abtasten und für eine geeignete Auswertung bereitstellen.

Die Seitenanschläge legen sich im Gegensatz zur FR 1 206 421 an die jeweiligen Außenflanken der zugeordneten Schienen an; diese Außenflanken sind im wesentlichen keinem Verschleiß unterworfen, so daß sie sich besser als die Innenflächen als Referenzflächen eignen. Dabei ist vorzugsweise der Seitenanschlag des Meßkopfes fest an diesem angeordnet, während der Seitenanschlag des Auslegerkopfes verschiebbar ist. Der Meßkopf wird durch den festen Seitenanschlag in eindeutiger Lage bezüglich der als Referenzfläche dienenden Außenflanke der Schiene gehalten, so daß die vom Profilmeßtaster ermittelten Daten auf diese Referenzfläche bezogen werden könnte.

Der bewegliche Seitenanschlag des Auslegerkopfes kann direkt als Meßtaster für die Erfassung der Spurweite dienen. In bevorzugter Ausgestaltung ist jedoch vorgesehen, daß am Auslegerkopf ein in Richtung des Stützauslegers beweglicher, zur Anlage an der Innenflanke der zugeordneten Schiene bestimmter Spurweitentaster vorgesehen ist, welcher mit einer Einrichtung zum Erfassen der Position des Spurweitentasters gegenüber einem feststehenden Teil des Stützauslegers versehen ist. Da die Spurweite eine große Strecke ist, bei der erst größere Abweichungen relevant sind, genügt zur Spurweitenerfassung auch ein an der Innenflanke anlegbarer Spurweitentaster.

Um den Meßkopf gegenüber der zu vermessenden Schiene exakt zu positionieren, ist außerdem ein zur Anlage an der Oberseite der Schiene bestimmter erster Auflageanschlag vorgesehen. Bei Anlage des Seitenanschlages und des Auflageanschlages an den zugeordneten Flächen des Schienenkopfes ist das Meßgerät richtig positioniert.

Außerdem ist vorgesehen, daß am Meßkopf ein mit der Steuerung verbundener Auflagefühler angeordnet ist, welcher erst bei ordnungsgemäßer Auflage des Meßkopfes auf die Schiene ein Freigabesignal zur Durchführung der Messung gibt.

Bei der erfindungsgemäßen Meßanordnung kann die aufwendige Höhenverstelleinrichtung der Meßfühleranordnung entsprechend der EP 0 404 597 A1 entfallen, da die Meßanordnung direkt auf das zu messende Werkstück aufgelegt wird und zwei Flächen des zu vermessenden Werkstückes selbst als Referenzfläche verwendet werden.

Eine weitere, für die Qualität einer Gleisanlage relevante Größe ist auch die absolute Höhe einer Schiene. Um auch diese messen zu können, ist erfindungsgemäß vorgesehen, daß ein zur Unterseite der zu vermessenden Schiene ausrichtbarer Stützfuß mit einer horizontalen Stützfläche vorgesehen ist und daß der Meßkopf einen zur Auflage auf dieser Stützfläche bestimmten zweiten Auflageanschlag hat; die gegenseitige Anordnung der beiden Auflageanschläge des Meßkopfes ist so getroffen, daß bei Verwendung des Stützfußes der erste Auflageanschlag nicht aufliegt. Damit hat der Meßkopf eine auf die Unterseite der Schiene bezogene Höhenlage, so daß mittels des Meßtasters die absolute Höhe erfaßt werden kann. Die Stützfläche ist vorzugsweise vertikal verstellbar und damit beispielsweise auf unterschiedliche Schienenhöhen einstellbar.

Durch die digitale Erfassung und Ausgabe der Positionsdaten der Schlitten wird die Möglichkeit eröffnet, diese Daten zunächst in einem dem Meßgerät zugeordneten Speicher abzulegen; dem Meßgerät wird zu diesem Zweck ein Schreib-Lese-Speicher zugeordnet, welcher mit der Positionserfassungseinrichtung verbunden wird. Derartige Speicher können heutzutage klein und leicht sowie äußerst preiswert hergestellt werden. Damit kann auf das Mitführen eines Zeichengerätes verzichtet werden, so daß das erfindungsgemäße Meßgerät sehr kompakt und leicht gebaut werden kann.

Die gespeicherten Daten können über die vorgesehene Schnittstelle an eine Auswerteeinrichtung gegeben werden, die diese Daten in beliebiger Weise verarbeiten und über einen Plotter als Zeichnung ausgeben kann. Selbstverständlich besteht auch die Möglichkeit, die gemessenen Daten unmittelbar an eine angeschlossene Auswerteeinheit zu übergeben.

In weiterer Ausgestaltung der Erfindung ist vorgesehen, daß der Schreib-Lese-Speicher als eine in das Gerät einsetzbare und von diesem abnehmbare Speicherkarte mit eigener Stromversorgung ausgebildet ist. Das eröffnet die Möglichkeit, unabhängig von der Kapazität einer einzelnen Speicherkarte durch Auswechseln dieser Speicherkarten eine beliebige Anzahl von Messungen hintereinander durchzuführen. Insbesondere kann dadurch auf besonders einfache Weise der Meßbetrieb vor Ort vom Auswertebetrieb getrennt werden. Die eigene Stromversorgung der Speicherkarte gewährleistet, daß die Daten nach dem Entfernen der Speicherkarte aus dem Meßgerät nicht verloren gehen.

Die Positionserfassungseinrichtung umfaßt in einer bevorzugten Ausgestaltung der Erfindung einen mit dem X-Schlitten antriebsverbundenen Schrittmotor und eine mit dem Schrittmotor zusammenwirkende Schrittzählereinrichtung. Der Schrittmotor in Verbindung mit einem Schrittzähler ermöglicht eine definitive Positionsbestimmung des X-Schlittens. Die Schritteilung moderner Schrittmotoren kann genügend klein gemacht werden, um eine für den vorliegenden Zweck ausreichend hohe Auflösung zu erreichen. Außerdem besteht die Möglichkeit, durch zwischen dem Schrittmotor und dem X-Schlitten angeordnete mechanische Übertragungsmittel eine weitere Übersetzung zu schaffen, womit die Auflösung weiter erhöht werden kann. Durch die Verwendung eines Schrittmotors für die Verstellung des X-Schlittens besteht insbesondere auch die Möglichkeit, die Positionsmessung des Y-Schlittens zeitlich in die Stillstandphasen zwischen den Verstellphasen des Stellmotors zu legen und damit die weiter vorne erwähnte Aufzeichnung von Schwingungen zu vermeiden. Dadurch erreicht man genauere, von nicht relevanten Bewegungen der Schlitten freie Meßkurven.

Für die Wegmessung des Y-Schlittens ist ein mit diesem verbundenes Wegmeßgerät mit digitalem Ausgang vorgesehen. Dieses ist vorzugsweise ein induktiver Meßwertgeber mit nachgeschaltetem Analog/Digitalwandler. Derartige Geräte sind marktüblich und existieren in zahlreichen Ausführungen.

In weiterer Ausgestaltung der Erfindung ist eine zentrale Steuerung zur Ansteuerung des Stellmotors und zur Verarbeitung und Ausgabe der Positionsdaten vorgesehen. Diese Steuerung gibt die Schritte des Stellmotors vor und koordiniert die durch den Schrittzähler definierte X-Koordinate mit der zugehörigen, gemessenen Y-Koordinate zu einer Position in der X-Y-Ebene. Die Steuerung gibt insbesondere auch die Möglichkeit, die Meßaufgaben des Meßgerätes beispielsweise um eine Spurmessung sowie um eine Profilhöhenmessung zu erweitern, wie weiter unten genauer beschreiben wird.

Ein Ausführungsbeispiel der Erfindung ist in der Zeichnung dargestellt und im folgenden näher beschrieben. Es zeigen:
- Fig. 1: schematisch ein Meßgerät mit einem Stützausleger in Meßposition;
- Fig. 2: den Meßkopf des Meßgerätes der Fig. 1 in einer Längsschnittdarstellung;
- Figur 3: den Meßkopf der Fig. 2 in einer Draufsicht-Schnittdarstellung;
- Figur 4: in perspektivischer Darstellung eine Einzelheit aus Figur 2;
- Figur 5: den Stützkopf des Meßgerätes der Figur 1;
- Figur 6: einen Stützkopf für eine Spurmessung;
- Figur 7: einen Stützfuß für die absolute Höhenmessung einer Schiene;
- Figur 8: ein Blockschaltbild für das erfindungsgemäße Meßgerät.

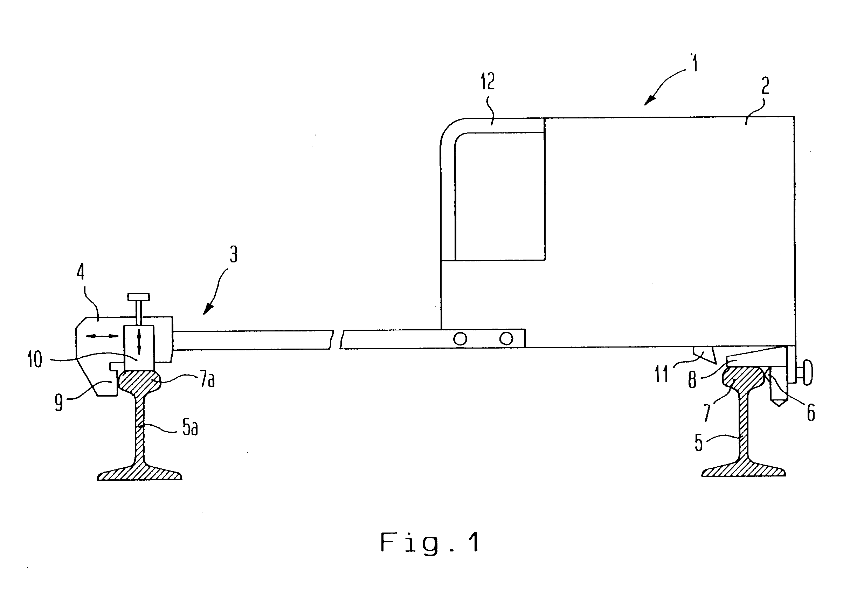

Das in Figur 1 dargestellte Meßgerät 1 besteht im wesentlichen aus einem Meßkopf 2 und einem Stützausleger 3 mit einem daran angeordneten Auslegerkopf 4. Der Meßkopf 2 wird auf eine Schiene 5 aufgesetzt, deren Schienenkopf-Querprofil gemessen und aufgezeichnet werden soll. Der Auslegerkopf 4 wird auf die zweite, der zu vermessenden Schiene 5 parallele Schiene 5a aufgelegt, so daß das Meßgerät 1 gegen seitliches Kippen abgestützt ist.

Wie Figur 1 weiter erkennen läßt, hat der Meßkopf 2 einen Seitenanschlag 6 zur Anlage an der äußeren Seitenflanke des Schienenkopfes 7 sowie einen Auflageanschlag 8 zur Auflage auf der Oberseite des Schienenkopfes 7.

Der Auslegerkopf 4 hat ebenfalls einen Seitenanschlag 9 zur Anlage an der äußeren Seitenflanke des Schienenkopfes 7a der zweiten Schiene 5a sowie einen Auflageanschlag 10 zur Auflage auf der Oberseite des Schienenkopfes 7a. Die Länge des Stützauslegers 3 ist in an sich bekannter Weise veränderbar, so daß das Gerät beispielsweise an Gleisanlagen mit unterschiedlicher Spurweite angepaßt werden kann. Wie in Figur 1 weiter angedeutet ist, ist der Auflageanschlag 10 des Auslegerkopfes 4 höhenverstellbar, so daß auf diese Weise die Querlage des gesamten Meßgerätes 1 exakt eingestellt werden kann.

Der an der Unterseite des Meßkopfes 2 herausstehende Meßtaster 11 ist in einer noch zu beschreibenden Weise in der Zeichenebene der Figur 1 so beweglich angeordnet, daß er die Kontur des Schienenkopfes 7 der zu vermessenden Schiene 5 zwischen den äußeren Seitenflanken dieses Meßkopfes abtasten kann.

Mit 12 ist ein Griff bezeichnet, an welchem das Meßgerät 1 getragen werden kann.

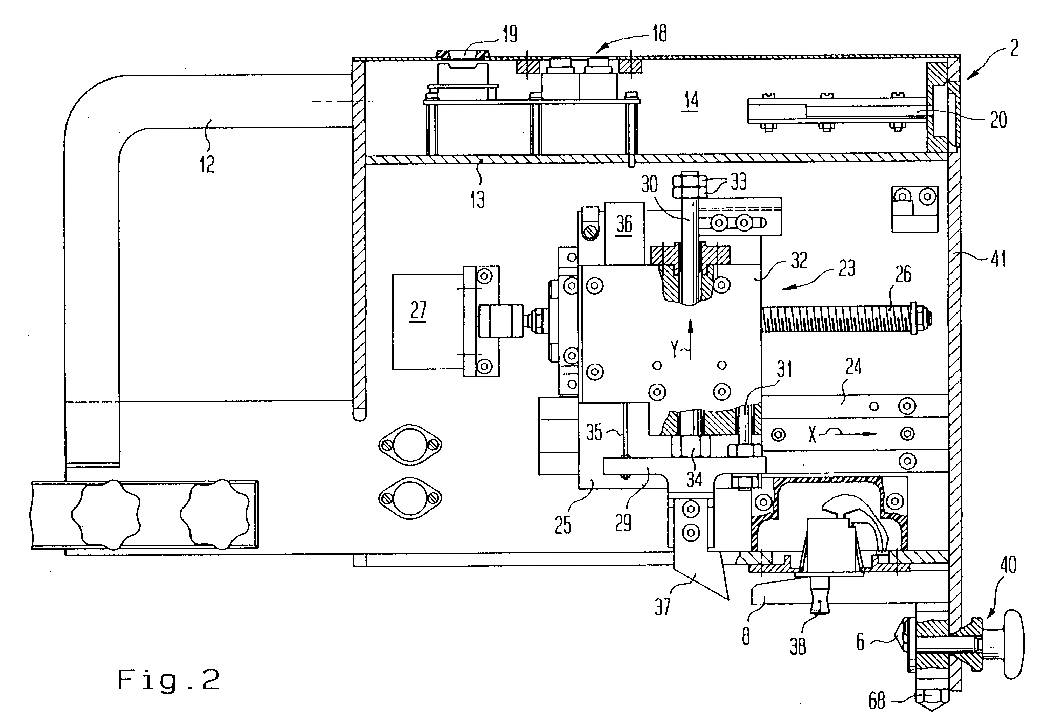

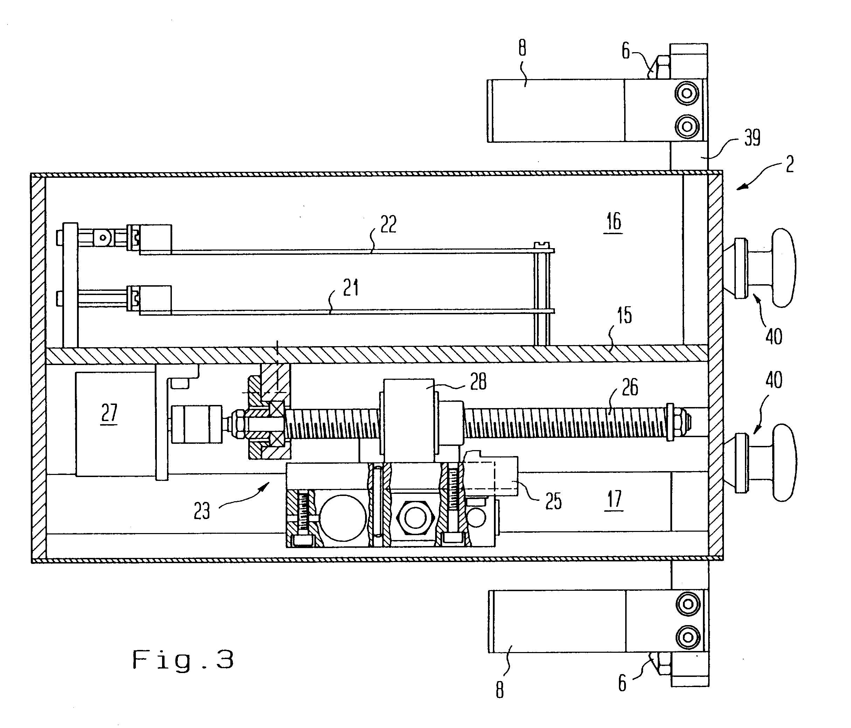

Die Figuren 2 bzw. 3 zeigen in vergrößerter, teilweise geschnittener Darstellung den Meßkopf 2 in einer Seitenansicht bzw. einer Draufsicht. Wie insbesondere Figur 2 erkennen läßt, ist der Meßkopf 2 durch eine horizontale Wand 13 geteilt, so daß sich ein oberes, sich über die ganze Breite und Länge des eigentlichen Meßkopfes erstreckendes Fach 14 ergibt. Wie insbesondere Figur 3 erkennen läßt, ist der unterhalb der horizontalen Wand 13 liegende Teil des Meßkopfes 2 durch eine vertikale Wand 15 in ein rechtes Fach 16 und ein linkes Fach 17 geteilt.

Das obere Fach 14 dient zur Aufnahme einer Bedienungstastatur 18, einer Anzeigeeinrichtung 19, eines cherkartenschachtes 20 zum Stecken einer auswechselbaren Speicherkarte 48 und des Hauptschalters 50 für das Meßgerät 1.

Das rechte Fach 16 nimmt eine Prozessor- bzw. Steuerungsplatine 21, eine Stromversorgungsplatine 22 sowie einen nicht dargestellten Akkumulator für die Stromversorgung auf.

Im linken Fach 17 ist die Meßtasteranordnung untergebracht, die als ganzes mit 23 bezeichnet wird.

Die Meßtasteranordnung 23 umfaßt eine in X-Richtung sich erstreckende X-Führung 24, auf der ein X-Schlitten 25 verschiebbar gelagert ist. Parallel zur X-Führung 24 erstreckt sich eine Gewindespindel 26, die mit einem an der vertikalen Wand 15 befestigten Schrittmotor 27 gekuppelt ist. Eine am X-Schlitten angeordnete Spindelmutter 28 wirkt mit der Gewindespindel 26 zusammen, so daß bei einer Drehung der Gewindespindel 26 der X-Schlitten 25 in X-Richtung verfahren wird.

Am X-Schlitten 25 ist ein Y-Schlitten 29 in Y-Richtung beweglich gelagert. Zu diesem Zweck sind an der Oberseite des plattenartigen Y-Schlittens zwei parallele, sich in Y-Richtung erstreckende Führungsstangen 30, 31 befestigt, die über geeignete Gleitlager in einem mit dem X-Schlitten 25 verbundenen Lagerbock 32 gelagert sind. Die Führungsstange 30 ist mit oberen Anschlagmuttern 33 und einer unteren Anschlagmutter 34 zur Begrenzung des vertikalen Weges des Y-Schlittens 29 versehen.

Außerdem ist an der Oberseite des Y-Schlittens 29 ein Fühlerstift 35 angeordnet, welcher mit einem am X-Schlitten 25 angeordneten induktiven Wegmeßgeber 36 zusammenwirkt.

Am Y-Schlitten 29 ist ein Meßtaster 37 befestigt, welcher dazu dient, die Kontur des Schienenkopfes 7 einer zu vermessenden Schiene 5 abzutasten.

Für den Einsatz wird das Meßgerät 1 in der in Figur 1 dargestellten Weise auf die Schienen 5 bzw. 5a aufgesetzt, wobei der Seitenanschlag 6 an die äußere Seitenflanke des Schienenkopfes 7 angelegt und der Auflageanschlag 8 auf die Oberseite des Schienenkopfes 7 aufgelegt werden. Ein an der Unterseite des Meßkopfes 2 im Bereich des Auflageanschlages 8 angeordneter Auflagefühler 38 wird beim Aufsetzen des Meßgerätes betätigt und gibt ein Freigabesignal zur Durchführung eines Meßvorganges ab.

Wie insbesondere aus Figur 3 ersichtlich ist, sind jeweils zwei mit einem horizontalen Abstand zueinander angeordnete Seitenanschläge 6 sowie Auflageanschläge 8 vorgesehen, um ein verkantungsfreies Aufsetzen des Meßgerätes auf die zu vermessende Schiene sicherzustellen. Die Seitenanschläge 6 bzw. die Auflageanschläge 8 sind an einem gemeinsamen Riegel 39 befestigt, der über dexierschraubenanordnungen 40 an der über die Unterseite des Meßkopfes 2 herabgezogenen Rückwand 41 befestigt werden.

Der Auslegerkopf 4 wird in der weiter vorne bereits beschriebenen Weise mit seinem Seitenanschlag 9 an die äußere Seitenflanke und mit dem Auflageanschlag 10 an die Oberseite des zweiten Schienenkopfes 7a angelegt.

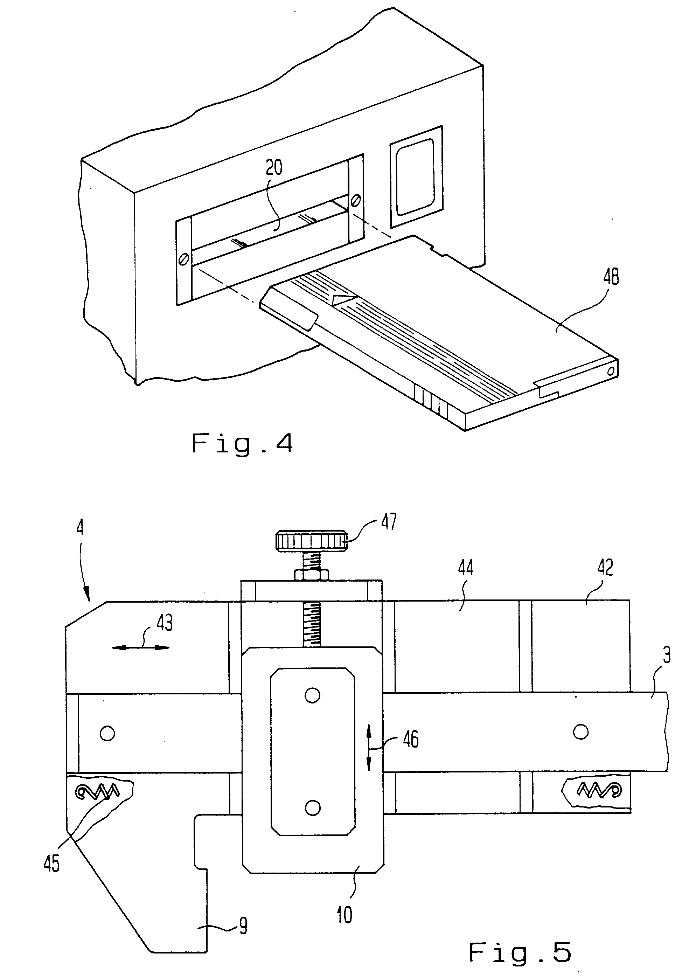

Ein bevorzugtes Ausführungsbeispiel eines Auslegerkopfes 4 und seiner Funktion wird anhand der Figur 5 beschrieben. Der Auslegerkopf 4 besteht im wesentlichen aus einem fest mit dem Stützausleger 3 verbundenen Basisteil 42 und einem längs des Stützauslegers 3 in Richtung des Pfeiles 43 verschiebbaren Schiebeteil 44. Das Schiebeteil 44 ist mit dem Basisteil 42 über eine Zugfeder 45 verbunden, so daß das Schiebeteil 43 in Figur 5 nach rechts vorgespannt ist. Am Schiebeteil 44 ist außerdem der Auflageanschlag 10 in Richtung des Pfeiles 46 über eine Stellschraube 47 verstellbar angeordnet. Zum Aufsetzen des Auslegerkopfes 4 auf die zugeordnete Schiene 5a wird zunächst das Schiebeteil 44 gegen die Kraft der Zugfeder 45 nach außen so weit verschoben, daß er den Schienenkopf 7a übergreifen kann, und wird dann auf dem Schienenkopf 7a abgelegt, wobei sich der Auflageanschlag 8 auf der Oberseite des Schienenkopfes abstützt. Nach Loslassen des Schiebeteils 44 wird dieser durch die Zugfeder 45 in Richtung zum Basisteil 42 gezogen, wobei sich der am Schiebeteil 44 ausgebildete Seitenanschlag 9 an die äußere Seitenflanke des Schienenkopfes 7a anlegt. Durch eine vertikale Verstellung des Auflageanschlages 10 kann die Querlage des gesamten Meßgerätes 1 exakt eingestellt werden.

Zur Durchführung einer Messung wird in der in Figur 4 dargestellten Weise eine Speicherkarte 48 (RAM-Karte) in den Speicherkartenschacht 20 eingelegt und der neben dem Schacht 20 angeordnete Hauptschalter 49 betätigt. Das Meßgerät ist meßbereit.

Über die Bedienungstastatur 18 können unterschiedliche Funktionen, beispielsweise der Meßvorgang, aufgerufen werden. Zu Beginn eines Meßvorganges befindet sich der Meßtaster 37 in seiner Startstellung, d.h. der X-Schlitten 25 befindet sich in seiner in Figur 2 rechten Endstellung. Der Schrittmotor 27 bewegt den X-Schlitten 25 aus der Startstellung schrittweise nach links (in Figur 2), wobei der Y-Schlitten 29 über den auf dem Schienenkopf 7 aufliegenden Meßtaster 37 entsprechend dem Höhenprofil verstellt wird. In der Praxis führt der Schrittmotor 768 Schritte durch, wobei nach jedem Verstellschritt die Y-Position des Y-Schlittens 29 mittels des Wegmeßgebers 36 gemessen wird. In der Steuerung 21 werden die Y-Positionen den jeweiligen X-Positionen zugeordnet und auf diese Weise Koordinatenpaare gebildet, die als digitale Daten entweder direkt an eine angeschlossene Auswerteeinrichtung gegeben oder auf der im Schacht 20 befindlichen Speicherkarte abgelegt werden. Die Daten der Meßpunktkoordinaten können in der Auswerteeinrichtung, beispielsweise einem PC, in beliebiger Weise verarbeitet, d.h. in andere Maßstäbe übertragen oder maßstäblich verzerrt werden.

Nach dem Meßvorgang wird das Meßgerät von den Schienen abgehoben und der X-Schlitten 25 wird über eine der Bedienungstasten 18 in seine Startposition zurückgefahren.

Um die Spurweite der Gleisanlage, d.h. den Abstand der beiden Schienenköpfe 7, 7a zu messen, ist ein Auslegerkopf 4a vorgesehen. Dieser Auslegerkopf 4a gleicht in seinem Grundaufbau dem Auslegerkopf 4 der Figur 5, d.h. er hat einen durch Federkraft an die Außenflanke der zugeordneten Schiene anlegbaren Seitenanschlag 9a und einen nicht näher dargestellten, über eine Stellschraube 47a vertikal verstellbaren Auflageanschlag.

Er hat zusätzlich einen auf einem zum Stützausleger 3 parallelen Meßlineal 50 verschiebbaren digitalen Meßschieber 51, welcher über ein Kabel 52 mit der Steuerung des Meßgerätes verbunden werden kann.

Am Meßschieber 51 ist ein Anschlagtaster 53 befestigt, welcher an die innere Seitenflanke des zugeordneten Schienenkopfes 7a anlegbar ist.

Der Meßschieber 51 ist durch eine Zugfeder 54 in einer Richtung vorgespannt, bei der der Anschlagtaster 53 vom zugeordneten Schienenkopf abgehoben ist. Er wird durch die Zugfeder 54 an einen Anschlag 55 angelegt, welcher einen definierten Abstand zum Meßkopf 2, beispielsweise zu dem daran angeordneten Seitenanschlag 6 hat. In dieser Stellung wird die Meßanzeige des Meßschiebers 51 durch eine Taste 56 auf Null gesetzt. Sodann wird der Meßschieber 51 über einen daran angeordneten Handgriff 57 gegen die Kraft der Zugfeder 54 verfahren, bis der Anschlagtaster 53 an der inneren Seitenflanke des Schienenkopfes anliegt. Der dabei zurückgelegte Weg ist, unter Berücksichtigung der definierten Position des Anschlages 55, ein Maß für die Spurweite der Gleisanlage. Die vom Meßschieber 51 gemessenen Daten werden über das Kabel 52 an die Steuerung gegeben und beispielsweise im Speicher 48 zur späteren Auswertung gelegt.

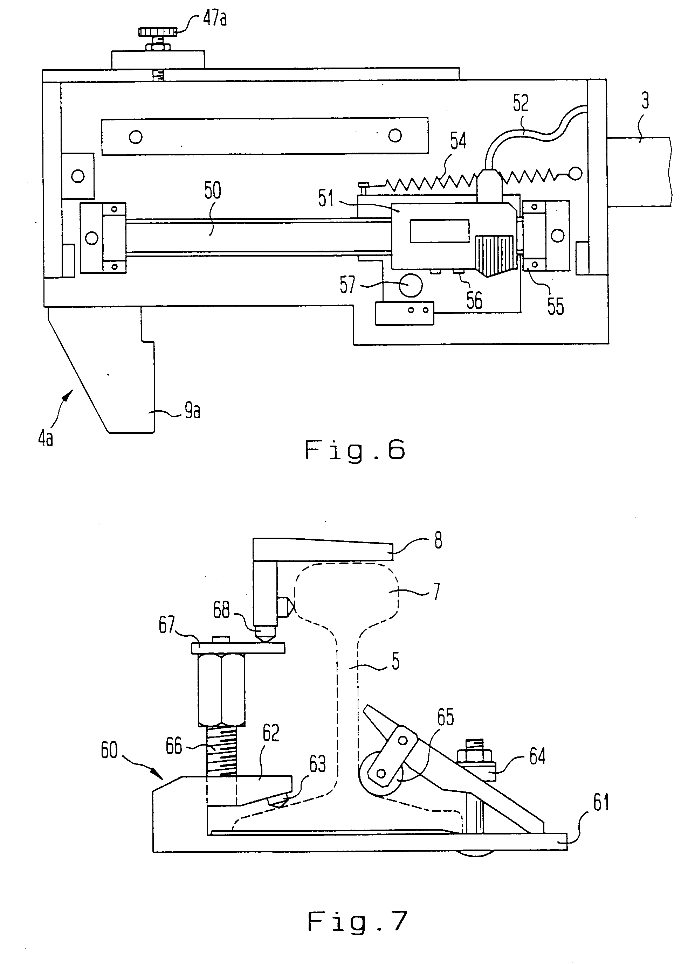

Figur 7 zeigt einen Stützfuß 60 zur Messung der absoluten Höhe einer Schiene 5. Der Stützfuß 60 umfaßt im wesentlichen eine Bodenplatte 61, die unter die Schiene 5 schiebbar ist. An einer Seite der Bodenplatte 61 ist ein den Untergurt der Schiene 5 übergreifender U-förmiger Flansch 62 ausgebildet, an welchem ein sich auf die Oberseite des Untergurtes auflegender Anschlag 63 angeordnet ist. An der anderen Seite der Bodenplatte ist eine mittels eines Spannbolzens 64 gegen die Schiene 5 im Bereich zwischen deren Untergurt und deren Vertikalsteg andrückbare Spannrolle 65 vorgesehen. Mit Hilfe des Anschlages 63 und der Spannrolle 65 kann der Stützfuß 60 an die Schienenunterseite fest angelegt werden.

Am U-förmigen Flansch 62 ist außerdem über eine vertikale Verstellschraube 66 eine horizontale Stützplatte 67 befestigt. Die horizontale Stützplatte 67 kann mittels der Verstellschraube 66 vertikal verstellt werden.

Für den Meßvorgang wird ein am Meßkopf 2 angeordneter Höhenanschlag 68 (siehe auch Figur 2) auf die Stützplatte 67 aufgesetzt. Die Stützplatte 67 wird in ihrer Höhe so eingestellt, daß zwischen dem Auflageanschlag 8 und der Oberseite des Schienenkopfes 7 ein Luftspalt verbleibt. Dadurch wird gewährleistet, daß der Meßkopf 2 in der Höhe zur Schienenunterseite und nicht, wie im Falle der Querprofilmessung des Schienenkopfes 7, zur Schienenoberseite ausgerichtet ist. Dadurch läßt sich die absolute Höhe der Schienenoberseite bezogen auf die Schienenunterseite über den Meßtaster 37 bestimmen.

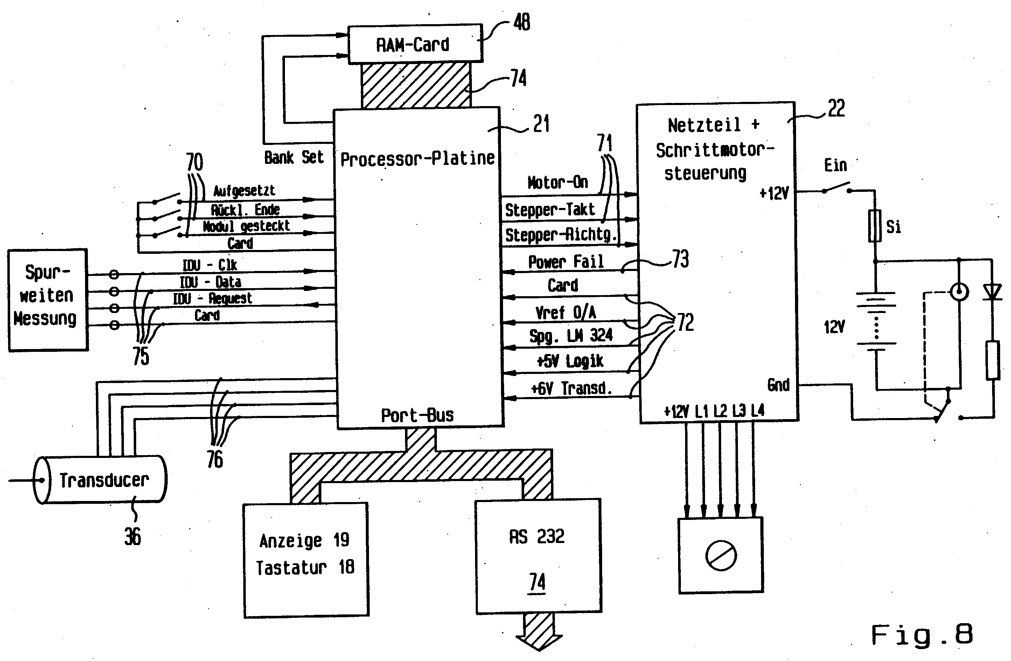

Figur 8 zeigt ein Blockdiagramm einer Steuerungsanordnung für ein Meßgerät. Das zentrale Element der rungsanordnung ist die Prozessor- oder Steuerungsplatine 21 (siehe auch Figur 3). Dieser werden einerseits über Eingangsleitungen 70 unterschiedliche Freigabesignale zugeleitet, die anzeigen, daß das Meßgerät einsatzbereit ist. Eine dieser Leitungen 70 ist beispielsweise mit dem Auflagefühler 38 verbunden; andere zeigen an, daß der Meßtaster sich in seiner Startstellung befindet, daß eine Speicherkarte 48 gesteckt ist usw.

Die Steuerungsplatine 21 ist über Steuerleitungen 71 mit der Stromversorgungsplatine 22 verbunden, die auch die Leistungssteuerung für den Schrittmotor enthält.

Über die Steuerleitungen 71 werden der Betrieb und die Drehrichtung des Schrittmotors 27 gesteuert.

Die Steuerungsplatine 21 wird andererseits über die Versorgungsleitungen 72 mit unterschiedlichen Betriebsspannungen für die unterschiedlichen Komponenten der Steuerungsanordnung versorgt.

Über eine weitere Signalleitung 73 erhält die Steuerungsplatine 21 ein Signal, wenn die Stromversorgung der Steuerungsanordnung ausfällt.

Die Steuerungsplatine 21 ist über einen Ein-/Ausgabe-Port einerseits mit der Bedienungstastatur 18 und der Anzeigeeinrichtung 19 und andererseits mit einer genormten Schnittstelle 74 verbunden, über die eine werteeinrichtung an die Steuerungsanordnung angeschlossen werden kann.

Die Speicherkarte 48 ist über einen Datenbus 74 mit der Steuerungsplatine 21 verbunden.

Der Auslegerkopf 4a (siehe Figur 6) ist über Signalleitungen 75 mit der Steuerungsplatine 21 verbunden. Diese Signalleitungen 75 sind in dem in Figur 6 mit 52 bezeichneten Kabel zusammengefaßt.

Der Wegmeßgeber 36 ist über Signalleitungen 76 mit der Steuerungsplatine 21 verbunden, über die die Y-Positionen des Y-Schlittens 29 an die Steuerung gemeldet werden.

## Patentansprüche

1. Meßgerät zum Vermessen von Gleisschienen, umfassend einen auf eine zu vermessende Schiene (5) aufsetzbaren Meßkopf (2) und einen am Meßkopf befestigten, im wesentlichen quer zu Schiene ausgerichteten, mit einem Auslegerkopf (4) auf die andere Schiene (5a) auflegbaren Stützausleger (3), wobei der Meßkopf und der Auslegerkopf jeweils einen an eine Seitenflanke der zugeordneten Schiene anlegbaren Seitenanschlag (6,9) aufweisen, von denen einer in Richtung des Stützauslegers verschiebbar und in Anlegerichtung federnd vorgespannt ist, dadurch **gekennzeichnet,**
- daß die Seitenanschläge (6, 9) sich an die jeweiligen Außenflanken der zugeordneten Schienen (5, 5a) anlegen,
- daß der Seitenanschlag (6) des Meßkopfes (2) fest angeordnet und der Seitenanschlag (9) des Auslegerkopfes (4) verschiebbar ist,
- daß am Auslegerkopf (4) ein in Richtung des Stützauslegers (3) beweglicher, zur Anlage an der Innenflanke der zugeordneten Schiene (5a) bestimmter Spurweitentaster (53) vorgesehen ist, welcher mit einer Einrichtung (51) zum Erfassen der Position des Spurweitentasters (53) versehen ist,
- daß der Meßkopf (2) einen quer zur Schiene mittels eines Stellmotors verfahrbaren ersten Schlitten (X-Schlitten) und einen an diesem in vertikaler Richtung frei beweglich angeordneten, einen Profilmeßtaster tragenden zweiten Schlitten (Y-Schlitten) aufweist, wobei dem X-Schlitten und dem Y-Schlitten eine Einrichtung zum Erfassen der Position des Meßfühlers in der X-Y-Ebene zugeordnet ist, und
- daß als Positionserfassungseinrichtung eine die X-Positionen und die zugeordneten Y-Positionen digital erfassende und als digitale Positionsdaten ausgebende Einrichtung (27, 36) vorgesehen ist, daß der Positionserfassungseinrichtung ein Schreib-Lese-speicher (48) zum Speichern der Positionsdaten nachgeordnet werden kann, und daß eine Schnittstelle (74) zum Übertragen der ausgegebenen oder gespeicherten Positionsdaten an eine separate Auswerteeinrichtung vorgesehen ist.

2. Meßgerät nach Anspruch 1, dadurch **gekennzeichnet,** daß am Meßkopf (2) wenigstens ein fester Auflageanschlag (8) und am Auslegerkopf (4) ein vertikal verstellbarer Auflageanschlag (10) angeordnet ist.

3. Meßgerät nach Anspruch 1 oder 2, dadurch **gekennzeichnet,** daß am Meßkopf (2) ein Auflagefühler (38) angeordnet ist.

4. Meßgerät nach Anspruch 1 bis 3, dadurch **gekennzeichnet,** daß der Spurweitentaster (53) durch eine Feder (54) in Richtung von der inneren Flanke der zugeordneten Schiene (5a) fort zur Anlage an einem fest mit dem Stützausleger verbundenen Anschlag (55) hin vorgespannt ist.

5. Meßgerät nach Anspruch 1 bis 4, dadurch **gekennzeichnet,** daß der Einrichtung (51) zur Erfassung der Position des Spurweitentasters (53) eine Einrichtung zur Nullstellung der Position und zur Speicherung des größten Verschiebeweges zugeordnet ist.

6. Meßgerät nach einem der Ansprüche 1 bis 5, dadurch **gekennzeichnet,** daß ein zur Unterseite der zu vermessenden Schiene (5) ausrichtbarer Stützfuß (60) mit einer horizontalen Stützfläche (2) einen zur Auflage auf der Stützfläche (67) bestimmten zweiten Auflageanschlag (68) hat derart, daß der erste Auflageanschlag (8) bei Aufliegen des zweiten Auflageanschlages (68) einen Abstand von der Oberseite der Schiene (5) hat, so daß mittels des Profilmeßtasters (37) die Höhe der Schiene (5) mit Bezug auf ihre Unterseite meßbar ist.

7. Meßgerät nach Anspruch 6, dadurch **gekennzeichnet,** daß die Stützfläche (67) vertikal verstellbar ist.

8. Meßgerät nach einem der Ansprüche 1 bis 7, dadurch **gekennzeichnet,** daß der Schreib-Lese-Speicher (48) als in das Gerät einsetzbare und von diesem abnehmbare Speicherkarte mit eigener Stromversorgung ausgebildet ist.

9. Meßgerät nach einem der Ansprüche 1 bis 8, dadurch **gekennzeichnet,** daß die Positionserfassungseinrichtung einen mit dem X-Schlitten (25) antriebsverbundenen Schrittmotor (27) und eine mit dem Schrittmotor (27) zusammenwirkende Schrittzählereinrichtung umfaßt.

10. Meßgerät nach einem der Ansprüche 1 bis 9, dadurch **gekennzeichnet,** daß die Positionserfassungseinrichtung ein mit dem Y-Schlitten (29) verbundenes Wegmeßgerät (35, 36) mit digitalem Ausgang umfaßt.

11. Meßgerät nach einem der Ansprüche 1 bis 10, dadurch **gekennzeichnet,** daß der Meßwertgeber des zweiten Schlittens ein induktiver Meßwertgeber mit nachgeschaltetem Analog/Digitalwandler ist.

12. Meßgerät nach einem der Ansprüche 1 bis 11, dadurch **gekennzeichnet,** daß eine zentrale Steuerung (21) zur Ansteuerung des Stellmotors (27) und zur Verarbeitung und Ausgabe der Positionsdaten vorgesehen ist.

## Claims

1. A measuring apparatus for surveying railway track rails, including a measuring head (2) which can be put on to a rail (5) to be surveyed, and a support cantilever arm (3) which is fixed to the measuring head and which is oriented substantially transversely to the rail and which can be put on to the other rail (5a) with a cantilever arm head (4), wherein the measuring head and the cantilever arm head each have a side abutment (6, 9) which can be applied against a side flank of the associated rail and of which one is displaceable in the direction of the support cantilever arm and is resiliently biased in the application direction, characterised in that
- the side abutments (6, 9) are applied against the respective outside flanks of the associated rails (5, 5a),
- the side abutment (6) of the measuring head (2) is arranged fixedly and the side abutment (9) of the cantilever arm head (4) is displaceable,
- provided at the cantilever arm head (4) is a track gauge sensor (53) which is movable in the direction of the support cantilever arm (3) and which is intended to bear against the inside flank of the associated rail (5a) and which is provided with a means (51) for detecting the position of the track gauge sensor (53),
- the measuring head (2) has a first carriage (X-carriage) which is displaceable transversely with respect to the rail by means of an actuator motor and a second carriage (Y-carriage) which is arranged on the first carriage freely movably in a vertical direction and which carries a profile measuring sensor, wherein a means for detecting the positioning of the measuring sensor member in the X-Y-plane is associated with the X-carriage and the Y-carriage, and
- the position detection means is a means (27, 36) which digitally detects the X-positions and the associated Y-positions and outputs same as digital position data, a random access memory (48) for storage of the position data can be arranged at the output side of the position detection means, and there is provided an interface (74) for transmitting the outputted or stored position data to a separate evaluation means.

2. A measuring apparatus according to claim 1 characterised in that at least one fixed support abutment (8) is arranged at the measuring head (2) and a vertically displaceable support abutment (10) is arranged at the cantilever arm head (4).

3. A measuring apparatus according to claim 1 or claim 2 characterised in that a support sensor member (38) is arranged at the measuring head (2).

4. A measuring apparatus according to claims 1 to 3 characterised in that the track gauge sensor (53) is biased by a spring (54) in a direction away from the inside flank of the associated rail (5a) to bear against an abutment (55) which is fixedly connected to the support cantilever arm.

5. A measuring apparatus according to claims 1 to 4 characterised in that associated with the means (51) for detecting the position of the track gauge sensor (53) is a means for zero setting of the position and for storage of the greatest displacement travel.

6. A measuring apparatus according to one of claims 1 to 5 characterised in that a support foot (60) which has a horizontal support surface (67) and which can be aligned with respect to the underside of the rail (5) to be surveyed has a second support abutment (68) which is intended to bear on the support surface (67) in such a way that when the second support abutment (68) is in the supported condition the first support abutment (8) is at a spacing from the top side of the rail (5) so that the height of the rail (5) with respect to its underside can be measured by means of the profile measuring sensor (37).

7. A measuring apparatus according to claim 6 characterised in that the support surface (67) is vertically adjustable.

8. A measuring apparatus according to one of claims 1 to 7 characterised in that the random access memory (48) is in the form of a memory card with its own power supply, which can be fitted into and removed from the apparatus.

9. A measuring apparatus according to one of claims 1 to 8 characterised in that the position detection means includes a stepping motor (27) drivingly connected to the X-carriage (25) and a step counting means co-operating with the stepping motor (27).

10. A measuring apparatus according to one of claims 1 to 9 characterised in that the position detection means includes a travel measuring apparatus (35, 36) with digital output, which is connected to the Y-carriage (29).

11. A measuring apparatus according to one of claims 1 to 10 characterised in that the measurement value sensor of the second carriage is an inductive measurement value sensor with analog/digital converter connected on the output side thereof.

12. A measuring apparatus according to one of claims 1 to 11 characterised in that there is provided a central control (21) for actuating the actuator motor (27) and for processing and output of the position data.

## Revendications

1. Appareil de mesure pour le contrôle de rails de voies ferrées, comprenant une tête de mesure (2) pouvant être disposée sur un rail (5) à contrôler et un bras d'appui (3) fixé à la tête de mesure, orienté sensiblement transversalement au rail et pouvant être disposée avec une tête de bras (4) sur l'autre rail (5a), la tête de mesure et la tête de bras comportant respectivement une butée latérale (6, 9) pouvant être appuyée contre un flanc latéral du rail associé, une des butées étant déplaçable en direction du bras d'appui et précontraint de manière élastique dans la direction du bras, caractérisé en ce que,
- les butées latérales (6, 9) s'appuient sur les flancs extérieurs respectifs des rails associés (5, 5a),
- la butée latérale (6) de la tête de mesure (2) est disposée fixement et la butée latérale (9) de la tête de bras (4) est déplaçable,
- au niveau de la tête de bras (4) est prévu un palpeur d'écartement de rails (53) mobile dans la direction du bras d'appui (3) destiné à s'appuyer sur le flanc interne du rail associé (5a), ledit palpeur étant pourvu d'un dispositif (51) pour détecter la position du palpeur d'écartement de rail (53),
- la tête de mesure (2) comprend un premier chariot (chariot X) déplaçable transversalement au rail au moyen d'un servomoteur et un second rail (chariot Y) portant un palpeur de mesure de profil et disposé par rapport au premier chariot de manière mobile librement dans la direction verticale, un dispositif étant associé au chariot X et au chariot Y pour détecter la position du capteur de mesure dans le plan X-Y, et
- il est prévu, en tant que dispositif de détection de position, un dispositif (27,36) détectant numériquement les positions X et les positions Y associées et délivrant des données de position numériques, une mémoire d'écriture-lecture (48) peut être associée au dispositif de détection de position pour le stockage des données de position, et une interface (74) est prévue pour transmettre les données de position délivrées ou stockées à un dispositif d'analyse séparé.

2. Appareil de mesure selon la revendication 1, caractérisé en ce qu'il est prévu au moins une butée d'appui fixe (8) sur la tête de mesure (2) et une butée d'appui verticalement déplaçable (10) sur la tête de bras (4).

3. Appareil de mesure selon la revendication 1 ou 2, caractérisé en ce qu'un détecteur d'appui est prévu sur la tête de mesure (2).

4. Appareil de mesure selon les revendications 1 à 3, caractérisé en ce que le palpeur d'écartement de rails (53) est précontraint par un ressort (54) en éloignement du flanc intérieur du rail associé (5a) pour appuyer sur une butée (55) reliée fixement avec le bras d'appui.

5. Appareil de mesure selon les revendications 1 à 4, caractérisé en ce qu'un dispositif pour la remise à zéro de la position et pour le stockage du chemin de déplacement le plus grand est associé au dispositif (51) pour la détection de la position du palpeur d'écartement de rails (53).

6. Appareil de mesure selon l'une des revendications 1 à 5, caractérisé en ce qu'un pied d'appui (60) orientable par rapport au côté inférieur du rail (5) à contrôler et ayant une surface d'appui horizontale (2) comporte une seconde butée d'appui (68) destinée à s'appuyer sur la surface d'appui (67) de telle sorte que la première butée d'appui (8) présente lors de l'appui de la seconde butée d'appui (68) un écart par rapport à la face supérieure du rail (5) de telle sorte qu'au moyen du palpeur de mesure de profil (37) on peut mesurer la hauteur du rail (5) par rapport à son côté inférieur.

7. Appareil de mesure selon la revendication 6, caractérisé en ce que la surface d'appui (67) est déplaçable verticalement.

8. Appareil de mesure selon l'une des revendications 1 à 7, caractérisé en ce que la mémoire d'écriture-lecture (48) est réalisée sous la forme d'une carte de mémoire insérable dans l'appareil et retirable de celui-ci et ayant une alimentation de courant propre.

9. Appareil de mesure selon l'une des revendications 1 à 8, caractérisé en ce que le dispositif de détection de position comporte un moteur pas-à-pas (27) relié de manière menante au chariot X (25) et un dispositif de comptage de pas coopérant avec le moteur pas-à-pas (27).

10. Appareil de mesure selon l'une des revendications 1 à 9, caractérisé en ce que le dispositif de détection de position comprend un appareil de mesure de déplacement (35, 36) relié au chariot Y (29) et ayant une sortie numérique.

11. Appareil de mesure selon l'une des revendications 1 à 10, caractérisé en ce que le capteur de mesure du deuxième chariot est un capteur de mesure inductif ayant un convertisseur analogique/numérique connecté à la suite.

12. Appareil de mesure selon l'une des revendications 1 à 11, caractérisé en ce qu'une commande centrale (21) est prévue pour commander le servomoteur (27) et pour le traitement et la sortie des données de position.
